# EUROPEAN PATENT APPLICATION

(11) **EP 4 274 187 A1**
(43) Date of publication of application: **08.11.2023**
(21) Application number: 22748869.9
(22) Date of filing: 19.01.2022
(51) Int. Cl.: H04L 61/50

(54) **TRANSMISSION METHOD AND SYSTEM FOR PEER-TO-PEER NETWORK**

(30) Priority: 03.02.2021 CN 202110149137
(71) Applicant: Shanghai Bilibili Technology Co., Ltd., Yangpu District Shanghai 200433 (CN)
(72) Inventor: WANG, Sheng, Shanghai 200433 (CN)
(74) Representative: Simmons & Simmons
(86) International application number: PCT/CN2022/072802
(87) International publication number: WO 2022/166590

(57) **Abstract**

Embodiments of this application provide a peer-to-peer network transmission method, applied to a first peer node in the peer-to-peer network. The transmission method includes obtaining a target public network IP address and a target public network port of a second peer node from a networking service center, wherein the second peer node is located in the peer-to-peer network and configured to access a public network through a corresponding NAT device, and wherein public network IP addresses and public network ports of all nodes in the peer-to-peer network are collected by the networking service center in advance; and establishing a connection to the second peer node based on the target public network IP address and the target public network port to perform NAT traversal transmission. In the embodiments of this application, when a connection needs to be established between peer nodes, the first peer node that initiates the connection may directly obtain a public network IP address and a public network port of a connection object (such as the second peer node) from the networking service center, so as to establish a NAT traversal connection. In this way, connection efficiency is high.

## Description

This application claims priority to Chinese Patent Application No. 202110149137.3, filed on February 3, 2021, and entitled "PEER-TO-PEER NETWORK TRANSMISSION METHOD AND SYSTEM", which is incorporated herein by reference in its entirety.

### TECHNICAL FIELD

Embodiments of this application relate to the field of data transmission technologies of a peer-to-peer network, and in particular, to a peer-to-peer network transmission system, a peer-to-peer network transmission method and apparatus, a computer device, and a computer-readable storage medium.

### BACKGROUND

A peer-to-peer (P2P) network, also referred to as a peer-to-peer computer network, is a distributed application architecture in which tasks and workloads are distributed between peers, and is a networking or network form formed by a peer-to-peer computing model at an application layer. "Peer" may also be referred to as "counterpart", "partner", or "peer end". A peer-to-peer network generally refers to distributed point-to-point direct transmission between clients. However, the client is usually located behind a NAT device. Specifically, a local IP address is allocated to the client. When the client needs to access a public network, the client needs to convert the local IP address into a public network IP address by using the NAT device, that is, the client needs to use the NAT device to access the public network. This may cause the following problems: If a connection needs to be established between two clients behind different NAT devices, NAT traversal is required.

However, a NAT traversal communication connection created between the two clients by using the conventional technology has low connection efficiency.

### SUMMARY

An objective of embodiments of this application is to provide a peer-to-peer network transmission system, a peer-to-peer network transmission method and apparatus, a computer device, and a computer-readable storage medium, so as to resolve the following problem: A NAT traversal communication connection created between two clients by using the conventional technology has low connection efficiency and poor reliability.

An aspect of the embodiments of this application provides a peer-to-peer network transmission system, including: a plurality of peer nodes, where at least a portion of the peer nodes access a public network through corresponding NAT devices; a STUN server, configured to return a corresponding public network IP address and a corresponding public network port to a peer node that communicates with the STUN server; and a networking service center, configured to: store public network IP addresses and public network ports that are reported by all the peer nodes, and further configured to: in response to a request of a first peer node in the plurality of peer nodes, provide a target public network IP address and a target public network port of a second peer node in the plurality of peer nodes to the first peer node, so that the first peer node establishes a connection to the second peer node based on the target public network IP address and the target public network port, so as to perform NAT traversal transmission between the first peer node and the second peer node, where the second peer node accesses the public network through a corresponding NAT device.

Optionally, the first peer node is configured to: obtain the target public network IP address and the target public network port from the networking service center; create a target socket based on the target public network IP address and the target public network port; start a QUIC client based on the target socket; and initiate a QUIC connection to the second peer node by using the QUIC client, to establish a QUIC connection to the second peer node, so as to perform NAT traversal transmission between the first peer node and the second peer node.

Optionally, the second peer node is configured to: create a local socket including a local IP address and a local port of the second peer node; request the STUN server based on the local socket to obtain the target public network IP address and the target public network port; report the target public network IP address and the target public network port to the networking service center, so as to provide the target public network IP address and the target public network port to the first peer node through the networking service center; start a QUIC server and monitor the local socket to listen to a connection request from the first peer node; and establish a QUIC connection based on the connection request to perform NAT traversal transmission between the first peer node and the second peer node.

An aspect of the embodiments of this application provides a peer-to-peer network transmission method, applied to a first peer node in the peer-to-peer network. The transmission method includes: obtaining a target public network IP address and a target public network port of a second peer node from a networking service center, where the second peer node is located in the peer-to-peer network and accesses a public network through a corresponding NAT device, and public network IP addresses and public network ports of all nodes in the peer-to-peer network are collected by the networking service center in advance; and establishing a connection to the second peer node based on the target public network IP address and the target public network port to perform NAT traversal transmission.

Optionally, the establishing a connection to the second peer node based on the target public network IP address and the target public network port to perform NAT traversal transmission includes: creating a target socket based on the target public network IP address and the target public network port; starting a QUIC client based on the target socket; and initiating a QUIC connection to the second peer node by using the QUIC client, and establishing a QUIC connection to the second peer node to perform NAT traversal transmission.

An aspect of the embodiments of this application provides a peer-to-peer network transmission method, applied to a passive peer node in the peer-to-peer network. The passive peer node accesses a public network through a corresponding NAT device. The transmission method includes: creating a local socket of the passive peer node, where the local socket includes a local IP address and a local port; requesting a STUN server based on the local socket to obtain a target public network IP address and the target public network port of the passive peer node; reporting the target public network IP address and the target public network port to a networking service center, so as to provide the target public network IP address and the target public network port to an active peer node in the peer-to-peer network through the networking service center; monitoring the local socket to obtain a connection request from the active peer node; and establishing a connection between the passive peer node and the active peer node based on the connection request to perform NAT traversal transmission.

Optionally, the monitoring the local socket to obtain a connection request from the active peer node includes: starting a QUIC server and monitoring the local socket to listen to a connection request from the active peer node.

An aspect of the embodiments of this application provides a peer-to-peer network transmission apparatus. The apparatus includes: a creation module, configured to create a local socket of a passive peer node, where the local socket includes a local IP address and a local port; an obtaining module, configured to request a STUN server based on the local socket to obtain a target public network IP address and the target public network port of the passive peer node; a reporting module, configured to report the target public network IP address and the target public network port to a networking service center, so as to provide the target public network IP address and the target public network port to an active peer node in the peer-to-peer network through the networking service center; a monitoring module, configured to monitor the local socket to obtain a connection request from the active peer node; and a connection module, configured to establish a connection between the passive peer node and the active peer node based on the connection request, so as to perform NAT traversal transmission between the passive peer node and the active peer node.

An aspect of the embodiments of this application provides a computer device. The computer device includes a memory, a processor, and a computer program that is stored in the memory and capable of running on the processor, and the processor is configured to implement the steps of the foregoing peer-to-peer network transmission method when executing the computer program.

An aspect of the embodiments of this application provides a computer-readable storage medium. The computer-readable storage medium stores a computer program, and the computer program may be executed by at least one processor, so that the at least one processor performs the steps of the foregoing peer-to-peer network transmission method.

In the peer-to-peer network transmission system, the peer-to-peer network transmission method and apparatus, the computer device, and the computer-readable storage medium that are provided in the embodiments of this application, each peer node located behind a NAT device obtains a public network IP address and a public network port of the peer node, and reports the public network IP address and the public network port to the networking service center. When a connection needs to be established between peer nodes, a peer node (for example, the first peer node) that initiates a connection may directly obtain a public network IP address and a public network port of a connection object (for example, the second peer node) from the networking service center, so as to initiate a connection request based on the public network IP address and the public network port of the connection object to establish a NAT traversal connection. In this way, connection efficiency is high.

### BRIEF DESCRIPTION OF DRAWINGS

FIG. 1 is a schematic diagram of an architecture of a peer-to-peer network transmission system according to Embodiment 1 of this application;
FIG. 2 is a schematic flowchart of a specific example according to Embodiment 1 of this application;
FIG. 3 is a schematic diagram of an operation procedure of a first peer node according to Embodiment 1 of this application;
FIG. 4 is a schematic diagram of an operation procedure of a second peer node according to Embodiment 1 of this application;
FIG. 5 is a flowchart of a peer-to-peer network transmission method according to Embodiment 2 of this application;
FIG. 6 is a sub-flowchart of step S502 in FIG. 5;
FIG. 7 is a flowchart of a peer-to-peer network transmission method according to Embodiment 3 of this application;
FIG. 8 is a sub-flowchart of step S708 in FIG. 7;
FIG. 9 is a block diagram of a peer-to-peer network transmission apparatus according to Embodiment 4 of this application;
FIG. 10 is a block diagram of a peer-to-peer network transmission apparatus according to Embodiment 5 of this application; and
FIG. 11 is a schematic diagram of a hardware architecture of a computer device suitable for implementing a communication method according to Embodiment 6 of this application.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely used to explain this application but are not intended to limit this application. All other embodiments obtained by a person of ordinary skill in the art based on the embodiments of this application without creative efforts shall fall within the protection scope of this application.

It should be noted that the terms "first", "second", and "third" in this application are merely used for description, and shall not be understood as an indication or implication of relative importance or an implicit indication of a quantity of indicated technical features. Therefore, features limited by "first" or "second" may explicitly or implicitly include at least one of the features. In addition, technical solutions in the embodiments may be combined with each other, provided that a person of ordinary skill in the art can implement the combination. When the combination of the technical solutions is contradictory or cannot be implemented, it should be considered that the combination of the technical solutions does not exist and does not fall within the protection scope of this application.

In the description of this application, it should be understood that digit numbers before steps does not indicate a sequence of performing the steps, and are only used to facilitate description of this application and differentiation of each step, but are not to be construed as a limitation to this application.

The following gives an explanation of the terms of this application:
Peer-to-peer (P2P) network, also referred to as a peer-to-peer computer network, is a distributed application architecture in which tasks and workloads are distributed between peers, and is a networking or network form formed by a peer-to-peer computing model at an application layer. "Peer" has the meaning of "counterpart", "partner", or "peer end" in English.

Network address translation (NAT), also referred to as network mask or IP mask, is a network address translation technology used to translate an internal private IP address into a public IP address.

Simple Traversal of User Datagram Protocol (UDP) Through Network Address Translators (NATs) (STUN) is a lightweight protocol that allows applications to discover the existence and types of NAT and a firewall between them and the public Internet. STUN further provides a capability for applications to determine public network IP addresses and public network ports allocated to them through NAT.

STUN client is an entity that generates a STUN request. The STUN client may be executed on a terminal system (for example, a PC of a user), or may be run in a network element, for example, a conference server. The STUN client is usually embedded in an application that needs to obtain a public network IP address and a public network port.

STUN server is an entity that receives a STUN request and sends a STUN response. The STUN server is usually connected to a public network.

### Embodiment 1

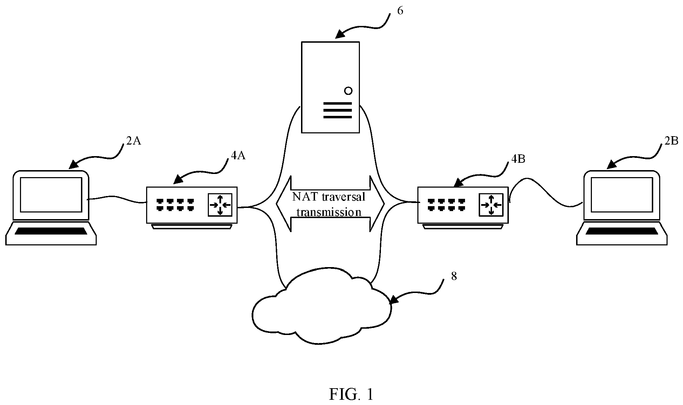

FIG. 1 is a schematic diagram of an architecture of a peer-to-peer network transmission system according to Embodiment 1 of this application. As shown in FIG. 1, in an example of the embodiment, the peer-to-peer network transmission system may include the following:
(1) A plurality of peer nodes 2A, 2B, ..., where at least a portion of the peer nodes access a public network through corresponding NAT devices
   Each peer node may be a smartphone, a tablet computer, a notebook computer, a personal computer, a virtual node, or the like. Each peer node is built with a STUN client, and the STUN client is configured to communicate with a STUN server.
   At least a portion of the peer nodes access the public network through corresponding NAT devices, that is, at least a portion of the peer nodes are located behind the corresponding NAT devices. For example, a first peer node 2A in the plurality of peer nodes is located behind a NAT device 4A, and a second peer node 2B in the plurality of peer nodes is located behind a NAT device 4B.
   It should be noted that the first peer node 2A may be any one of the plurality of peer nodes. The second peer node 2B may be any one of the plurality of peer nodes that is located behind a NAT device. The first peer node 2A and the second peer node 2B are different peer nodes.
   If a peer node (such as 2A or 2B) is located behind a NAT device, the peer node is configured with a local IP address (LocalIP) and a local port (LocalPORT), so that the peer node can be located in its local area network.
(2) NAT devices 4A, 4B, ..., used for address translation
   ANAT device may be a NAT router or another NAT electronic device, configured to translate LocalIP and LocalPORT of a peer node (such as 2A or 2B) located behind the NAT device into a public network IP address (PublicIP) and a public network port (PublicPORT), so that the peer node (such as 2A or 2B) can access the public network (such as the Internet).
(3) STUN server 6, configured to return a corresponding public network IP address and public network port to a peer node that communicates with the STUN server
   The following describes steps of obtaining the corresponding public network IP address and public network port.
   The second peer node 2B in the plurality of peer nodes is used as an example. First, a STUN client in the second peer node 2B accesses the STUN server 6 having public network IP addresses. Then, in the access process, LocalIP and LocalPORT in the second peer node 2B are translated by the second NAT device 4B into a corresponding target public network IP address and a corresponding target public network port. Therefore, the STUN server may know the target public network IP address and the target public network port of the STUN client, and return the foregoing information to the second peer node 2B.
(4) A networking service center 8, configured to: store public network IP addresses and public network ports that are reported by all the peer nodes; and further configured to: in response to a request of a first peer node in the plurality of peer nodes, provide a target public network IP address and a target public network port of a second peer node in the plurality of peer nodes to the first peer node, so that the first peer node establishes a connection to the second peer node based on the target public network IP address and the target public network port, so as to perform NAT traversal transmission between the first peer node and the second peer node, where the second peer node accesses the public network through a corresponding NAT device

For example, the networking service center 8 stores the target public network IP address and the target public network port that are corresponding to the second peer node 2B.

In an example, when the first peer node 2A actively initiates a connection to the second peer node 2B:
Step 1: The first peer node 2A sends a request to the networking service center 8.
Step 2: In response to the request of the first peer node 2A, return, to the first peer node 2A, the public network IP address and the public network port that are corresponding to the second peer node 2B, that is, return the target public network IP address and the target public network port.
Step 3: The first peer node 2A traverses the second NAT device 4B and initiates a connection request to the second peer node 2B based on the target public network IP address and the target public network port, so as to establish a connection to the second peer node 2B.

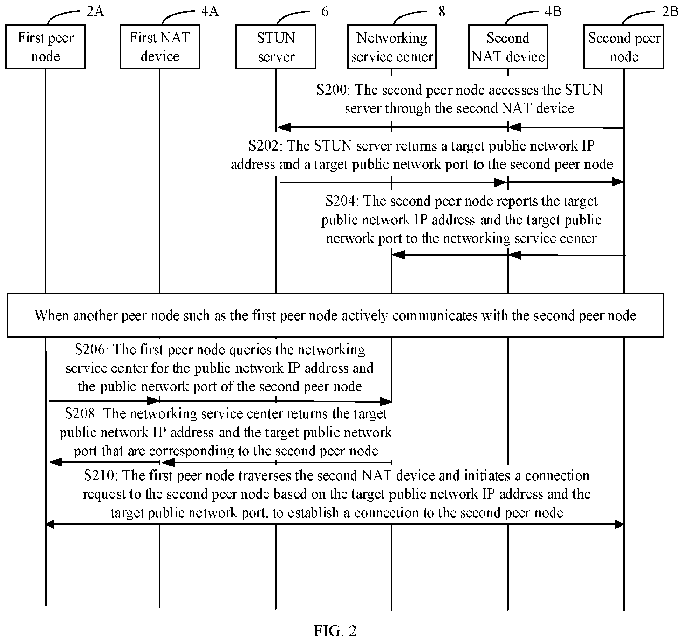

For clarity and better understanding, the following discloses a working procedure of the transmission system in this embodiment with reference to FIG. 1 and FIG. 2.

S200: The second peer node 2B accesses the STUN server 6 through the second NAT device 4B.

S202: The STUN server 6 returns the target public network IP address and the target public network port to the second peer node 2B.

S204: The second peer node 2B reports the target public network IP address and the target public network port to the networking service center 8.

When another peer node such as the first peer node 2A actively communicates with the second peer node 2B:
S206: The first peer node 2A queries the networking service center 8 for the public network IP address and the public network port of the second peer node 2B.
S208: The networking service center 8 returns the target public network IP address and the target public network port that are corresponding to the second peer node 2B.
S210: The first peer node 2A traverses the second NAT device 4B and initiates a connection request to the second peer node 2B based on the target public network IP address and the target public network port, so as to establish a connection to the second peer node 2B.

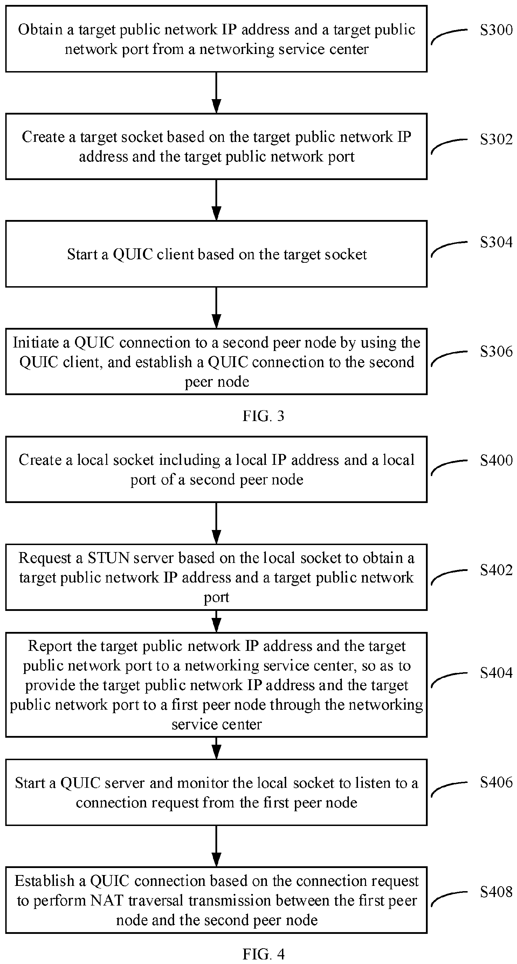

In an example, as shown in FIG. 3, when the first peer node 2A needs to actively connect to the second peer node 2B, the first peer node 2Amay specifically perform the following operations: Step S300: Obtain the target public network IP address and the target public network port from the networking service center 8. Step S302: Create a target socket based on the target public network IP address and the target public network port. Step S304: Start a QUIC client based on the target socket. Step S306: Initiate a QUIC connection to the second peer node by using the QUIC client to establish a QUIC connection to the second peer node 2B, so as to perform NAT traversal transmission between the first peer node 2A and the second peer node 2B. Compared with the conventional technology in which User Datagram Protocol (UDP) is used in a peer-to-peer network, this embodiment in which the Quick UDP Internet Connection (QUIC) protocol is used for communication transmission between two peer nodes has the following advantages: Fairness of a P2P connection can be implemented, and high reliability is ensured; secure transmission of content based on transport layer security (TLS) is implemented; a connection establishment time of 0 round-trip time (RTT) can be implemented; and there are excellent connection migration features.

In an example, as shown in FIG. 4, when the second peer node 2B needs to passively receive a connection request of another peer node (for example, the first peer node 2A), the second peer node 2B may specifically perform the following operations: Step S400: Create a local socket, where the local socket includes a local IP address and a local port of the second peer node. Step S402: Request the STUN server based on the local socket to obtain the target public network IP address and the target public network port. Step S404: Report the target public network IP address and the target public network port to the networking service center, so as to provide the target public network IP address and the target public network port to the first peer node through the networking service center. Step S406: Start a QUIC server and monitor the local socket, so as to listen to a connection request from the first peer node. Step S408: Establish a QUIC connection based on the connection request, so as to perform NAT traversal transmission between the first peer node and the second peer node. In this embodiment, an active connection request of another peer node can be efficiently received, so that the another peer node can traverse the second NAT device and implement a QUIC connection to the second peer node. In addition, this embodiment in which the QUIC protocol is used for communication transmission between two peer nodes has the following advantages: Fairness of a P2P connection can be implemented, and high reliability is ensured; secure transmission of content based on TLS is implemented; a connection establishment time of 0 RTT can be implemented; and there are excellent connection migration features.

### Embodiment 2

In this embodiment, the first peer node 2A is used as an execution body for description. For technical details and effects, refer to Embodiment 1.

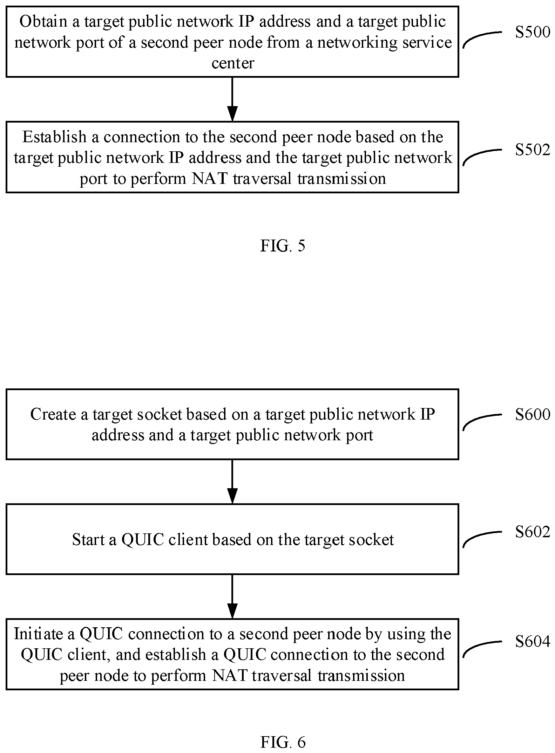

FIG. 5 is a schematic flowchart of a peer-to-peer network transmission method according to Embodiment 2 of this application.

As shown in FIG. 5, the peer-to-peer network transmission method may include steps S500 and S502.

Step S500: Obtain a target public network IP address and a target public network port of a second peer node from a networking service center, where the second peer node is located in the peer-to-peer network and accesses a public network through a corresponding NAT device, and public network IP addresses and public network ports of all nodes in the peer-to-peer network are collected by the networking service center in advance.

Step S502: Establish a connection to the second peer node based on the target public network IP address and the target public network port to perform NAT traversal transmission.

In an example, as shown in FIG. 6, step S502 may include steps S600 to S604. Step S600: Create a target socket based on the target public network IP address and the target public network port. Step S602: Start a QUIC client based on the target socket. Step S604: Initiate a QUIC connection to the second peer node by using the QUIC client, and establish a QUIC connection to the second peer node to perform NAT traversal transmission.

### Embodiment 3

In this embodiment, a passive peer node (equivalent to the second peer node 2B in FIG. 1) is used as an execution body for description. For technical details and effects, refer to Embodiment 1.

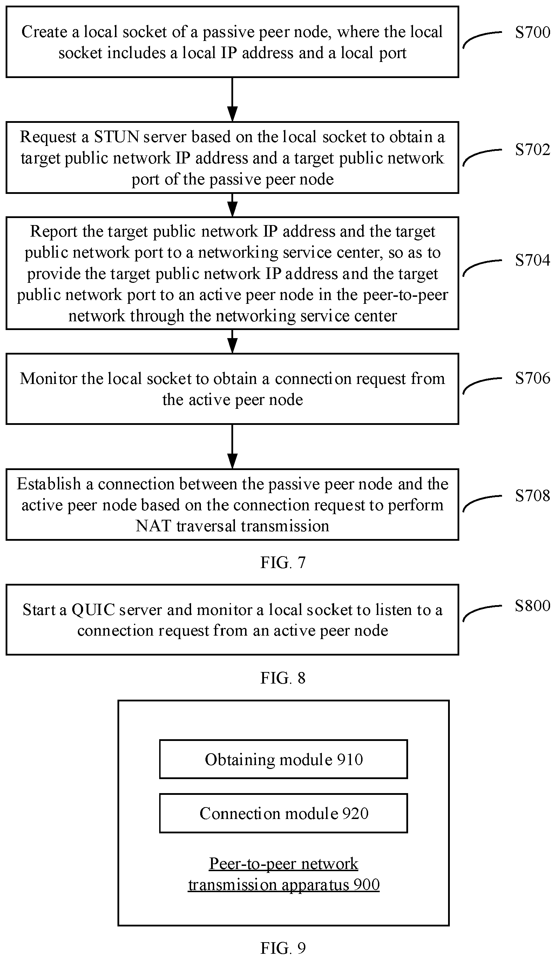

FIG. 7 is a schematic flowchart of a peer-to-peer network transmission method according to Embodiment 3 of this application.

As shown in FIG. 7, the peer-to-peer network transmission method may include steps S700 to S708.

Step S700: Create a local socket of the passive peer node, where the local socket includes a local IP address and a local port.

Step S702: Request a STUN server based on the local socket to obtain a target public network IP address and the target public network port of the passive peer node.

Step S704: Report the target public network IP address and the target public network port to a networking service center, so as to provide the target public network IP address and the target public network port to an active peer node in the peer-to-peer network through the networking service center.

Step S706: Monitor the local socket to obtain a connection request from the active peer node.

Step S708: Establish a connection between the passive peer node and the active peer node based on the connection request to perform NAT traversal transmission.

In an example, as shown in FIG. 8, step S708 may include step S800: Start a QUIC server and monitor the local socket to listen to a connection request from the active peer node.

### Embodiment 4

FIG. 9 is a schematic block diagram of a peer-to-peer network transmission apparatus according to Embodiment 4 of this application. The apparatus may be divided into one or more program modules. The one or more program modules are stored in a storage medium and executed by one or more processors, so as to complete this embodiment of this application. The program module in this embodiment of this application is a series of computer program instruction segments that can be used to complete a specified function. The following specifically describes a function of each program module in this embodiment.

As shown in FIG. 9, the peer-to-peer network transmission apparatus 900 may include an obtaining module 910 and a connection module 920.

The obtaining module 910 is configured to obtain a target public network IP address and a target public network port of a second peer node from a networking service center, where the second peer node is located in the peer-to-peer network and accesses a public network through a corresponding NAT device, and public network IP addresses and public network ports of all nodes in the peer-to-peer network are collected by the networking service center in advance.

The connection module 920 is configured to establish a connection to the second peer node based on the target public network IP address and the target public network port to perform NAT traversal transmission.

In an example, the connection module 920 is further configured to create a target socket based on the target public network IP address and the target public network port; start a QUIC client based on the target socket; and initiate a QUIC connection to the second peer node by using the QUIC client, and establish a QUIC connection to the second peer node to perform NAT traversal transmission.

### Embodiment 5

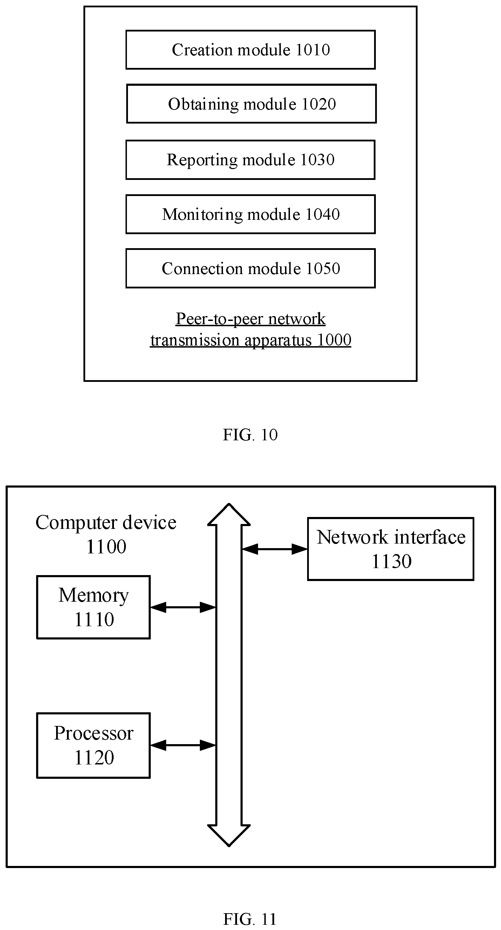

FIG. 10 is a schematic block diagram of a peer-to-peer network transmission apparatus according to Embodiment 5 of this application. The apparatus may be divided into one or more program modules. The one or more program modules are stored in a storage medium and executed by one or more processors, so as to complete this embodiment of this application. The program module in this embodiment of this application is a series of computer program instruction segments that can be used to complete a specified function. The following specifically describes a function of each program module in this embodiment.

As shown in FIG. 10, the peer-to-peer network transmission apparatus 1000 may include a creation module 1010, an obtaining module 1020, a reporting module 1030, a monitoring module 1040, and a connection module 1050.

The creation module 1010 is configured to create a local socket of a passive peer node, where the local socket includes a local IP address and a local port.

The obtaining module 1020 is configured to request a STUN server based on the local socket to obtain a target public network IP address and the target public network port of the passive peer node.

The reporting module 1030 is configured to report the target public network IP address and the target public network port to a networking service center, so as to provide the target public network IP address and the target public network port to an active peer node in the peer-to-peer network through the networking service center.

The monitoring module 1040 is configured to monitor the local socket to obtain a connection request from the active peer node.

The connection module 1050 is configured to establish a connection between the passive peer node and the active peer node based on the connection request, so as to perform NAT traversal transmission between the passive peer node and the active peer node.

In an example, the monitoring module 1040 is further configured to start a QUIC server and monitor the local socket to listen to a connection request from the active peer node.

### Embodiment 6

FIG. 11 is a schematic diagram of a hardware architecture of a computer device 11 suitable for implementing a communication method according to Embodiment 6 of this application. The computer device 11 is applicable to each peer node in Embodiment 1, and may also be used as an execution body in Embodiment 2 and Embodiment 3. In this embodiment, the computer device 11 is a device that can automatically calculate a value and/or process information based on an instruction that is set or stored in advance. For example, the computer device 11 may be a smartphone, a tablet computer, a notebook computer, a desktop computer, or the like. As shown in FIG. 11, the computer device 11 at least includes but is not limited to: a memory 1110, a processor 1120, and a network interface 1130 that can be communicatively connected to each other by using a system bus.

The memory 1110 includes at least one type of computer-readable storage medium. The readable storage medium includes a flash memory, a hard disk, a multimedia card, a card-type memory (for example, an SD memory or a DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the memory 1110 may be an internal storage module of the computer device 11, such as a hard disk or a memory of the computer device 11. In some other embodiments, the memory 1110 may be an external storage device of the computer device 11, for example, a removable hard disk, a smart media card (SMC), a secure digital (SD) card, or a flash card that is disposed on the computer device 11. Certainly, the memory 1110 may include both an internal storage module of the computer device 11 and an external storage device of the computer device 11. In this embodiment, the memory 1110 is generally configured to store an operating system and various application software that are installed on the computer device 11, for example, program code of the peer-to-peer network transmission method. In addition, the memory 1110 may be further configured to temporarily store various types of data that has been output or is to be output.

The processor 1120 may be a central processing unit (CPU), a controller, a microcontroller, a microprocessor, or another data processing chip in some embodiments. The processor 1120 is usually configured to control an overall operation of the computer device 11, for example, perform control and processing related to data exchange or communication performed by the computer device 11. In this embodiment, the processor 1120 is configured to run program code stored in the memory 1110 or process data.

The network interface 1130 may include a wireless network interface or a wired network interface, and the network interface 1130 is generally configured to establish a communication link between the computer device 11 and another computer device. For example, the network interface 1130 is configured to: connect the computer device 11 to an external terminal by using a network, and establish a data transmission channel, a communication link, and the like between the computer device 11 and the external terminal. The network may be a wireless or wired network such as an intranet, the Internet, a global system for mobile communications (GSM), a wideband code division multiple access (WCDMA), a 4G network, a 5G network, Bluetooth, or Wi-Fi.

It should be noted that FIG. 11 shows only a computer device with the components 1110 to 1130. However, it should be understood that implementation of all the shown components is not required, and more or fewer components may be alternatively implemented.

In this embodiment, the communication method stored in the memory 1110 may be further divided into one or more program modules to be executed by one or more processors (the processor 1120 in this embodiment), so as to complete this application.

### Embodiment 7

This embodiment further provides a computer-readable storage medium. The computer-readable storage medium stores a computer program. When the computer program is executed by a processor, steps of the peer-to-peer network transmission method in the embodiment are implemented.

In this embodiment, the computer-readable storage medium includes a flash memory, a hard disk, a multimedia card, a card-type storage (for example, an SD memory or a DX memory), a random access memory (RAM), a static random access memory (SRAM), a read-only memory (ROM), an electrically erasable programmable read-only memory (EEPROM), a programmable read-only memory (PROM), a magnetic memory, a magnetic disk, an optical disc, and the like. In some embodiments, the computer-readable storage medium may be an internal storage unit of a computer device, such as a hard disk or a memory of the computer device. In some other embodiments, the computer-readable storage medium may be an external storage device of the computer device, for example, a removable hard disk, a smart media card (SMC), a secure digital (SD) card, or a flash card that is disposed on the computer device. Certainly, the computer-readable storage medium may include both an internal storage unit of the computer device and an external storage device of the computer device. In this embodiment, the computer-readable storage medium is generally configured to store an operating system and various application software that are installed on the computer device, for example, program code of the peer-to-peer network transmission method in the embodiment. In addition, the computer-readable storage medium may be further configured to temporarily store various types of data that has been output or is to be output.

Clearly, a person skilled in the art should understand that the foregoing modules or steps in the embodiments of this application may be implemented by using a general computing apparatus. The modules or steps may be integrated into a single computing apparatus or distributed in a network including a plurality of computing apparatuses. Optionally, the modules or steps may be implemented by using program code that can be executed by the computing apparatus. Therefore, the modules or steps may be stored in a storage apparatus for execution by the computing apparatus. In addition, in some cases, the shown or described steps may be performed in a sequence different from the sequence herein. Alternatively, the modules or steps may be separately made into integrated circuit modules. Alternatively, a plurality of modules or steps in the modules or steps are made into a single integrated circuit module for implementation. In this way, a combination of any specific hardware and software is not limited in the embodiments of this application.

The foregoing descriptions are merely preferred embodiments of this application, and are not intended to limit the scope of this application. Any equivalent structure or equivalent process change made by using the content of the specification and the accompanying drawings of this application, or when directly or indirectly applied to other related technical fields, shall fall within the protection scope of this application.

## Claims

1. A peer-to-peer network transmission system, comprising:
a plurality of peer nodes, wherein at least a subset of the plurality of the peer nodes are configured access a public network through corresponding NAT devices;
a STUN server, configured to return a corresponding public network IP address and a corresponding public network port to a peer node that communicates with the STUN server; and
a networking service center, configured to store public network IP addresses and public network ports that are reported by the plurality of peer nodes; and the networking service center further configured to in response to a request of a first peer node among the plurality of peer nodes, provide a target public network IP address and a target public network port of a second peer node among the plurality of peer nodes to the first peer node such that the first peer node establishes a connection with the second peer node based on the target public network IP address and the target public network port so as to perform NAT traversal transmission between the first peer node and the second peer node, wherein the second peer node accesses the public network through a corresponding NAT device.

2. The transmission system according to claim 1, wherein the first peer node is configured to:
obtain the target public network IP address and the target public network port from the networking service center;
create a target socket based on the target public network IP address and the target public network port;
start a QUIC client based on the target socket; and
initiate a QUIC connection to the second peer node by using the QUIC client and establish the QUIC connection with the second peer node so as to perform NAT traversal transmission between the first peer node and the second peer node.

3. The transmission system according to claim 1 or 2, wherein the second peer node is configured to:
create a local socket comprising a local IP address and a local port of the second peer node;
request the STUN server based on the local socket to obtain the target public network IP address and the target public network port;
report the target public network IP address and the target public network port to the networking service center so as to provide the target public network IP address and the target public network port to the first peer node through the networking service center;
start a QUIC server and monitor the local socket to listen to a connection request from the first peer node; and
establish a QUIC connection based on the connection request to perform NAT traversal transmission between the first peer node and the second peer node.

4. A peer-to-peer network transmission method, comprising:
communicating with a STUN server by a second peer node through a second NAT device;
transmitting a target public network IP address and a target public network port to the second peer node from the STUN server;
reporting the target public network IP address and the target public network port to a networking service center by the second peer node;
requesting, by a first peer node, the networking service center for the target public network IP address and the target public network port of the second peer node when the first peer node actively intends to communicate with the second peer node;
returning, by the networking service center, the target public network IP address and the target public network port of the second peer node to the first peer node; and
initiating, by the first peer node, a request for connecting to the second peer node via traversing the second NAT device based on the target public network IP address and the target public network port, and establishing a connection with the second peer node.

5. A peer-to-peer network transmission method, applied to a first peer node in the peer-to-peer network, comprising:
obtaining a target public network IP address and a target public network port of a second peer node from a networking service center, wherein the second peer node is located in the peer-to-peer network and configured to access a public network through a corresponding NAT device, and wherein public network IP addresses and public network ports of all nodes in the peer-to-peer network are collected by the networking service center in advance; and
establishing a connection with the second peer node based on the target public network IP address and the target public network port of the second peer node to perform NAT traversal transmission.

6. The peer-to-peer network transmission method according to claim 5, wherein the establishing a connection with the second peer node based on the target public network IP address and the target public network port of the second peer node to perform NAT traversal transmission comprises:
creating a target socket based on the target public network IP address and the target public network port;
starting a QUIC client based on the target socket; and
initiating a QUIC connection to the second peer node by using the QUIC client, and establishing the QUIC connection with the second peer node to perform NAT traversal transmission.

7. A peer-to-peer network transmission apparatus, applied to a first peer node in the peer-to-peer network, the apparatus comprising:
an obtaining module, configured to obtain a target public network IP address and a target public network port of a second peer node from a networking service center, wherein the second peer node is located in the peer-to-peer network and configured to access a public network through a corresponding NAT device, and wherein public network IP addresses and public network ports of all nodes in the peer-to-peer network are collected by the networking service center in advance; and
a connection module, configured to establish a connection with the second peer node based on the target public network IP address and the target public network port of the second peer node to perform NAT traversal transmission.

8. The peer-to-peer network transmission apparatus according to claim 7, wherein the connection module is further configured to:
create a target socket based on the target public network IP address and the target public network port;
start a QUIC client based on the target socket; and
initiate a QUIC connection to the second peer node by using the QUIC client, and establish the QUIC connection with the second peer node to perform NAT traversal transmission.9. A peer-to-peer network transmission method, applied to a passive peer node in the peer-to-peer network, the passive peer node configured to access a public network through a corresponding NAT device, and the peer-to-peer network transmission method comprising:
create a local socket of the passive peer node, wherein the local socket comprises a local IP address and a local port;
request a STUN server based on the local socket for obtaining a target public network IP address and the target public network port of the passive peer node;
report the target public network IP address and the target public network port to a networking service center so as to provide the target public network IP address and the target public network port to an active peer node in the peer-to-peer network through the networking service center;
monitor the local socket to obtain a connection request from the active peer node; and
establish a connection between the passive peer node and the active peer node based on the connection request to perform NAT traversal transmission.

9. A peer-to-peer network transmission method, applied to a passive peer node in the peer-to-peer network, the passive peer node configured to access a public network through a corresponding NAT device, and the peer-to-peer network transmission method comprising:
creating a local socket of the passive peer node, wherein the local socket comprises a local IP address and a local port;
requesting a STUN server based on the local socket for obtaining a target public network IP address and the target public network port of the passive peer node;
reporting the target public network IP address and the target public network port to a networking service center so as to provide the target public network IP address and the target public network port to an active peer node in the peer-to-peer network through the networking service center;
monitoring the local socket to obtain a connection request from the active peer node; and
establishing a connection between the passive peer node and the active peer node based on the connection request to perform NAT traversal transmission.

10. The communication method according to claim 9, wherein the monitoring the local socket to obtain a connection request from the active peer node comprises:
starting a QUIC server and monitoring the local socket to listen to the connection request from the active peer node.

11. A peer-to-peer network transmission apparatus, applied to a passive peer node in the peer-to-peer network, the apparatus comprising:
a creation module, configured to create a local socket of a passive peer node, wherein the local socket comprises a local IP address and a local port;
an obtaining module, configured to request a STUN server based on the local socket to obtain a target public network IP address and the target public network port of the passive peer node;
a reporting module, configured to report the target public network IP address and the target public network port to a networking service center, so as to provide the target public network IP address and the target public network port to an active peer node in the peer-to-peer network through the networking service center;
a monitoring module, configured to monitor the local socket to obtain a connection request from the active peer node; and
a connection module, configured to establish a connection between the passive peer node and the active peer node based on the connection request, so as to perform NAT traversal transmission between the passive peer node and the active peer node.

12. The peer-to-peer network transmission apparatus according to claim 11, the monitoring module is further configured to starting a QUIC server and monitoring the local socket to listen to the connection request from the active peer node.

13. A computer device, applied to a first peer node in the peer-to-peer network, the computing device comprising a memory and a processor, wherein the memory stores computer readable instructions executable by the processor, and wherein the computer readable instructions, upon execution by the process, cause the processor to implement operations comprising:
obtaining a target public network IP address and a target public network port of a second peer node from a networking service center, wherein the second peer node is located in the peer-to-peer network and configured to access a public network through a corresponding NAT device, and wherein public network IP addresses and public network ports of all nodes in the peer-to-peer network are collected by the networking service center in advance; and
establishing a connection with the second peer node based on the target public network IP address and the target public network port of the second peer node to perform NAT traversal transmission.

14. The computing device according to claim 13, wherein the establishing a connection with the second peer node based on the target public network IP address and the target public network port of the second peer node to perform NAT traversal transmission comprises:
creating a target socket based on the target public network IP address and the target public network port;
starting a QUIC client based on the target socket; and
initiating a QUIC connection to the second peer node by using the QUIC client, and establishing the QUIC connection with the second peer node to perform NAT traversal transmission.

15. A computing device, applied to a passive peer node in the peer-to-peer network, the passive peer node configured to access a public network through a corresponding NAT device, the computing device comprising a memory and a processor, wherein the memory stores computer-readable instructions executable by the processor, and wherein the computer-readable instructions, upon execution by the process, cause the processor to implement operations comprising:
creating a local socket of the passive peer node, wherein the local socket comprises a local IP address and a local port;
requesting a STUN server based on the local socket and obtaining a target public network IP address and the target public network port of the passive peer node;
reporting the target public network IP address and the target public network port to a networking service center so as to provide the target public network IP address and the target public network port to an active peer node in the peer-to-peer network through the networking service center;
monitoring the local socket to obtain a connection request from the active peer node; and
establishing a connection between the passive peer node and the active peer node based on the connection request to perform NAT traversal transmission.

16. The computing device according to claim 15, wherein the monitoring the local socket to obtain a connection request from the active peer node comprises:
starting a QUIC server and monitoring the local socket to listen to the connection request from the active peer node.

17. A computer-readable storage medium, applied to a first peer node in the peer-to-peer network, wherein the computer-readable storage medium stores computer-readable instructions executable by a processor, and wherein the computer-readable instructions, upon execution by the process, cause the processor to implement operations comprising:
obtaining a target public network IP address and a target public network port of a second peer node from a networking service center, wherein the second peer node is located in the peer-to-peer network and configured to access a public network through a corresponding NAT device, and wherein public network IP addresses and public network ports of all nodes in the peer-to-peer network are collected by the networking service center in advance; and
establishing a connection with the second peer node based on the target public network IP address and the target public network port of the second peer node to perform NAT traversal transmission.

18. The computer-readable storage medium according to claim 17, wherein the establishing a connection with the second peer node based on the target public network IP address and the target public network port of the second peer node to perform NAT traversal transmission comprises:
creating a target socket based on the target public network IP address and the target public network port;
starting a QUIC client based on the target socket; and
initiating a QUIC connection to the second peer node by using the QUIC client, and establishing the QUIC connection with the second peer node to perform NAT traversal transmission.

19. A computer-readable storage medium, applied to a passive peer node in the peer-to-peer network, the passive peer node configured to access a public network through a corresponding NAT device, wherein the computer-readable storage medium stores computer-readable instructions executable by a processor, and wherein the computer-readable instructions, upon execution by the process, cause the processor to implement operations comprising:
creating a local socket of the passive peer node, wherein the local socket comprises a local IP address and a local port;
requesting a STUN server based on the local socket and obtaining a target public network IP address and the target public network port of the passive peer node;
reporting the target public network IP address and the target public network port to a networking service center so as to provide the target public network IP address and the target public network port to an active peer node in the peer-to-peer network through the networking service center;
monitoring the local socket to obtain a connection request from the active peer node; and
establishing a connection between the passive peer node and the active peer node based on the connection request to perform NAT traversal transmission.

20. The computer-readable storage medium according to claim 19, wherein the monitoring the local socket to obtain a connection request from the active peer node comprises:
starting a QUIC server and monitoring the local socket to listen to the connection request from the active peer node.
